# EUROPÄISCHE PATENTSCHRIFT

(11) **EP 2 321 041 B1**
(45) Veröffentlichungstag und Bekanntmachung des Hinweises auf die Patenterteilung: **05.06.2013**
(21) Anmeldenummer: 09780408.2
(22) Anmeldetag: 10.07.2009
(51) Int. Cl.: B01J 8/18, B01J 8/24, C01B 33/107

(54) **WIRBELSCHICHTREAKTOR, DESSEN VERWENDUNG UND EIN VERFAHREN ZUR ENERGIEAUTARKEN HYDRIERUNG VON CHLORSILANEN**
FLUIDIZED BED REACTOR, THE USE THEREOF, AND A METHOD FOR THE ENERGY-INDEPENDENT HYDRATION OF CHLOROSILANES
RÉACTEUR À LIT FLUIDISÉ, SON UTILISATION ET PROCÉDÉ D'HYDROGÉNATION, AUTONOME EN TERMES D'ÉNERGIE, DE CHLOROSILANES

(30) Priorität: 10.09.2008 DE 102008041974
(43) Veröffentlichungstag der Anmeldung: 18.05.2011
(73) Patentinhaber: Evonik Degussa GmbH, 45128 Essen (DE)
(72) Erfinder: TROLL, Harald, 63755 Alzenau (DE); ADLER, Peter, 79618 Rheinfelden (DE); SONNENSCHEIN, Raymund, 63755 Alzenau (DE)
(86) Internationale Anmeldenummer: PCT/EP2009/058790
(87) Internationale Veröffentlichungsnummer: WO 2010/028878

(56) Entgegenhaltungen:
- EP-A- 0 684 070
- WO-A-02/22501
- DE-A1- 10 063 863
- US-A- 4 176 710

## Beschreibung

Die vorliegende Erfindung betrifft eine Vorrichtung, deren Verwendung und ein Verfahren zur im Wesentlichen energieautarken kontinuierlichen Herstellung von Chlorsilanen, insbesondere zur Herstellung von Trichlorsilan als Zwischenprodukt für die Gewinnung von hochreinem Silicium.

Trichlorsilan, insbesondere in reiner Form, ist heute ein wichtiges Ausgangsmaterial u. a. für die Herstellung von hochreinem Silicium, beispielsweise für die Herstellung von Chips oder Solarzellen (WO 02/48034, EP 0 921 098).

Leider sind die bekannten Verfahren aufwendig und energieintensiv. So ist man bestrebt, das Material trotz höchster Qualitätsanforderungen immer kostengünstiger herzustellen.

Es ist lange bekannt aus metallurgischem Silicium (Si) unter Zusatz von Chlorwasserstoff (HCl) oder Methylchlorid Chlorsilane in einem Fließbett- oder Wirbelbettreaktor herzustellen (u. a. US 4,281,149).

Die Umsetzung von Silicium mit HCl verläuft stark exotherm. Dabei erhält man in der Regel Trichlorsilan (TCS) und Siliciumtetrachlorid (STC) als Hauptprodukte. Ferner ist der Einsatz spezieller Materialien für die Ausführung des Reaktors zu beachten (DE 36 40 172).

Auch ist man um die Selektivität der Reaktionen bemüht. So kann man die Reaktionen durch die Gegenwart mehr oder weniger geeigneter Katalysatoren beeinflussen. Als Beispiele dafür werden in der Literatur u. a. Fe, Cr, Ni, Co, Mn, W, Mo, V, P, As, Sb, Bi, O, S, Se, Te, Ti, Zr, C, Ge, Sn, Pb, Cu, Zn, Cd, Mg, Ca, Sr, Ba, B, Al, Y, Cl genannt. In der Regel liegen solche Katalysatoren bereits im metallurgischen Silicium vor, beispielsweise in oxidischer oder metallischer Form, als Silicide oder in anderen metallurgischen Phasen. Auch können Katalysatoren bei besagten Umsetzungen in metallischer bzw. legierter oder salzartiger Form zugesetzt werden bzw. zugegen sein. So kann auch das Wand- bzw. Oberflächenmaterial des verwendeten Reaktors einen katalytischen Einfluss bei der Umsetzung ausüben (u. a. B. Kanner and K. M. Lewis "Commercial Production of Silanes by the direct Synthesis", pages 1 - 66, Studies in Organic Chemistry 49, Catalyzed Direct Reactions of Silicon edited by K. M. Lewis and D. G. Rethwisch, 1993, Elsevier Science Publishers; H. Samori et al. "Effects of trace elements in metallurgical silicon on trichlorosilane synthesis reaction", Silicon for the chemical industry III, Sandefjord, Norway, June 18 - 20, 1996, pages 157 - 167; J. Acker et al. "Formation of silicides in the system Metal-Silicon-Chlorine-Hydrogen: Consequences for the synthesis of trichlorosilane from silicon an hydrogen chloride", Silicon for the chemical industry, Tromso, Norway, May 29 - June 2, 2000, pages 121 - 133; W.C. Breneman et al., "A comparison of the Trichlorosilane and silane routes in the purification of metallurgical grade silicon to semiconductor quatity", Silicon for the chemical industry IV, Geiranger, Norway, June 3 - 5,1998, pages 101 - 112; WO 03/018207, WO 05/003030).

Eine andere Möglichkeit zur Herstellung von Trichlorsilan ist die thermische Konvertierung von Siliciumtetrachlorid und Wasserstoff in der Gasphase in Gegenwart oder Abwesenheit eines Katalysators. Dieser Syntheseweg ist ebenfalls sehr energieintensiv, da die Reaktion endotherm verläuft (DE 10 2006 050 329, DE 10 2005 046703).

Ebenfalls kann man metallurgisches Silicium mit Siliciumtetrachlorid und Wasserstoff (DE 33 11 650) oder auch Silicium mit Siliciumtetrachlorid, Wasserstoff und HCl (DE 100 63 863, DE 100 44 795, DE 100 44 794, DE 100 45 367, DE 100 48 794, DE 100 61 682) umsetzen. Die Umsetzungen werden in der Regel unter Druck und hoher Temperatur durchgeführt. Ferner erfordern auch diese Verfahren die Zufuhr von Energie, was in der Regel elektrisch erfolgt und zunehmend zum Kostenfaktor wird. Dabei sind Silicium, Siliciumtetrachlorid und Wasserstoff bzw. Silicium, Siliciumtetrachlorid, Wasserstoff und Chlorwasserstoff als Eduktkomponenten unter Reaktionsbedingungen von 20 bis 42 bar und 400 bis 800 °C in den Reaktor zu dosieren, die Umsetzung zu starten und am Laufen zu halten.

Auch ist es notwendig im Falle einer Betriebsunterbrechung in einem Stand by Betrieb die Edukte bzw. Eduktzuführung auf den erforderlichen Betriebsdruck und Temperatur zu halten, um ohne lange Aufheizzeiten wieder anfahren bzw. den Betrieb fortsetzen zu können.

Somit bestand die Aufgabe, eine weitere, möglichst wirtschaftliche Möglichkeit zur großtechnischen, kontinuierlichen Umsetzung von Silicium (Si), Siliciumtetrachlorid (STC, SiCl₄), Wasserstoff (H₂) und optional Chlorwasserstoff (HCl) sowie gegebenenfalls weiterer Komponenten bereitzustellen, um oben genannte Probleme zu mildern.

Ein besonderes Anliegen der vorliegenden Erfindung war es, möglichst energie- und kostensparend Trichlorsilan (TCS, HSiCl₃) für ein Verbundsystem zur Herstellung von hochreinem Silicium, Chlor- bzw. Organosilanen und Organosiloxanen sowie pyrogener Kieselsäure bereitzustellen.

Die Aufgabe wird erfindungsgemäß entsprechend den Angaben in den Patentansprüchen gelöst.

So wurde in überraschender Weise gefunden, dass man die Umsetzung von partikelförmigem Si, Chlorsilanen, insbesondere SiCl₄, und H₂ sowie optional in Gegenwart mindestens eines Katalysators bei einem Druck von 25 bis 55 bar und einer Temperatur von 450 bis 650 °C in einer besonders energie- und damit kostensparender Weise durchführen kann, wenn man bei der Durchführung des vorliegenden Verfahrens gasbefeuerte Brenner, insbesondere Erdgasbrenner, für das Erhitzen des STC-Stroms sowie für den Anfahrprozess des Reaktors sowie für Regulierung bzw. Kontrolle verwendet.

So kann insbesondere im Falle einer Hydrierung von SiCl₄ im Rahmen des vorliegenden Verfahrens die notwendige Reaktionsenergie über die Reaktorheizung in einfacher und besonders wirtschaftlicher Weise vorteilhaft zugeführt werden. Darüber hinaus ist es möglich durch gezieltes Einbringen von HCl- und/oder Cl₂-Gas die Reaktion bzw. vorliegende Umsetzung exotherm zu führen. Ferner kann dabei überschüssige Wärmemenge über die Reaktortemperierung abgeführt und mittels Wärmetauscher beispielsweise zum Vorheizen von Eduktgasen vorteilhaft nutzen kann. So kann man HCl und/oder Cl₂ gezielt in den Wirbelschichtreaktor einbringen bzw. dosieren, um einen Energieeintrag zum Anfahren bzw. zur Aufrechterhaltung der vorliegenden Umsetzung bzw. Reaktionen in vorteilhafter energiesparender Weise zu regulieren.

Auch kann man bei der Durchführung des vorliegenden Verfahrens vorteilhaft mindestens einen Katalysator einsetzen. Dabei wählt man bevorzugt ein Katalysatorsystem auf der Basis mindestens eines Übergangsmetallelements, besonders bevorzugt mindestens eines Metalls aus der Reihe Fe, Co, Ni, Ca, Ta, W, beispielsweise in Form der Chloride, wie FeCl₂, CuCl, CuCl₂ u. s. w., und/oder entsprechender Metallsilicide oder Mischungen daraus, insbesondere bevorzugt man ein kupferhaltiges Katalysatorsystem.

Ferner kann man das vorliegende Verfahren sowie die dafür entwickelte Anlage, insbesondere die neue Wirbelschichtanlage, sowie eine solche Anlage vorteilhaft eingebunden in sogenannte Verbundsysteme für die Herstellung von Chlorsilanen, Silanen, Organosilanen, Organosiloxanen, pyrogener und gefällter Kieselsäure sowie Solarsilicium besonders vorteilhaft großtechnisch in einer besonders wirtschaftlichen, kontinuierlicher Fahrweise durchführen bzw. betreiben.

Gegenstand der vorliegenden Erfindung ist somit ein Wirbelschichtreaktor zur kontinuierlichen Hydrierung von höheren Chlorsilanen der Formel HₙSiCl₄₋ₙ mit n = 0, 1, 2 oder 3 in Gegenwart von Silicium, insbesondere zur Herstellung von Chlorsilanen durch Umsetzung von im Wesentlichen Silicium (**A**), Siliciumtetrachlorid (**B**), Wasserstoff (**C**) sowie optional Chlorwasserstoffgas und/oder Chlorgas (**D**) und optional in Gegenwart eines Katalysators bei einem Druck von 25 bis 55 bar und einer Temperatur von 450 bis 650 °C, wobei die Wirbelschichtreaktoreinheit (1) auf
- einem Reaktor bzw. Reaktormantel (1.1) mit einer Ummantelung (1.2) zum Kühlen oder Erwärmen bzw. Erhitzen des Reaktors sowie einer parallel zur Reaktorlängsachse und im Reaktorinnenraum angeordneten Wärmetauschereinheit (1.3), wobei die Einheiten (1.2) und (1.3) mit einem gasförmigen Medium (**F**) durchströmt werden können und das Medium (**F**) mittels gasbefeuertem Wärmetauscher (1.11) erwärmt werden kann,
- mindestens eine bodenseitige Zuführung (1.4) für Chlorsilan- bzw. STC-haltigen Eduktstrom (**B***),
- mindestens eine Zuführung (1.5) für einen oder mehrere gasförmige Einsatzstoffe aus der Reihe (**C**) und (**D**),
- mindestens eine (Feststoff-) Zuführung (1.6) für partikelförmiges Silicium (**A**), dem gegebenenfalls Katalysators beigemischt ist, und
- eine Abführung und Trennung für Produkt (**G, H**) über Reaktorkopf, Staubfilter (1.7) und Kondensator (1.8)
basiert. Dabei kann die Abwärme aus den Einheiten (1.2) und (1.3), geführt über die Leitungen (1.14) zum Wärmetauscher (1.10) (s. g. Heißgasrekuperator), vorteilhaft beispielsweise zum Vorwärmen von Gasströmen (**F**) und/oder mittels Wärmetauscher (1.5.5) für das Vorwärmen von (**C**) und/oder (**D**) enthaltenden Gasströmen genutzt werden. So kann zusätzlich die Abwärme der Anlageneinheiten in besonders energieeffizienter Weise für das Starten der Reaktion, deren Aufrechterhaltung und Steuerung im erfindungsgemäßen Wirbelschichtreaktor vorteilhaft genutzt werden.

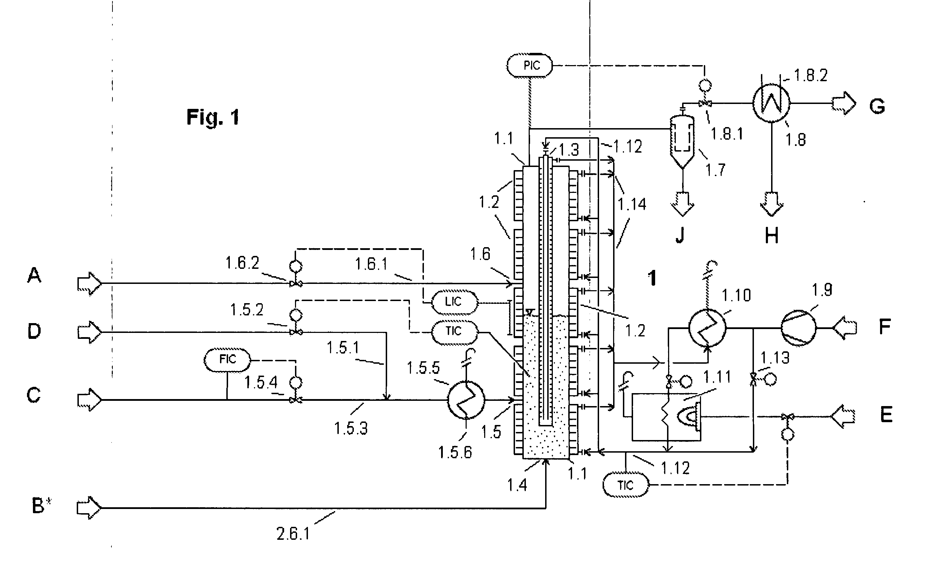

Die Figur 1 zeigt eine bevorzugte Ausführungsform des erfindungsgemäßen Wirbelschichtreaktors.

Dabei bevorzugt man einen Reaktormantel (1.1) mit einem Innendurchmesser von 100 mm bis 2000 mm und einer Höhe von 5 m bis 25 m, besonders vorzugsweise von 200 mm bis 1500 mm Innendurchmesser und einer Höhe von 10 m bis 20 m.

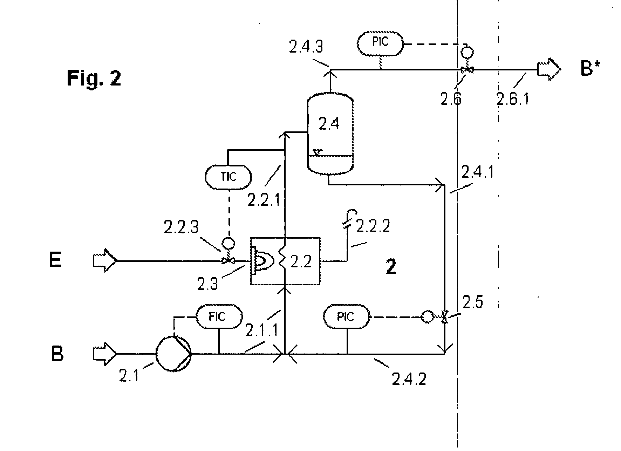

Für das Anfahren und gleichmäßige Beaufschlagen einer erfindungsgemäßen Wirbelschichtreaktoreinheit (1) mit einem erhitzten Eduktstrom (**B***), insbesondere STC, verwendet man vorteilhaft eine (erd-)gasbefeuerte Erhitzereinheit mit Kreislauf (2), vgl. beispielsweise Figur 2, worin der im Wesentlichen STC enthaltenden Chlorsilanstrom (**B**) von etwa 20 °C, d. h. Umgebungstemperatur, auf eine Temperatur bis 650 °C bei einem Druck von 25 bis 55 bar erhitzt werden kann und die Einheit (2) auf einer Chlorsilan-Zuführung (**B**), insbesondere von STC, mittels Pumpe (2.1), einem gasbefeuerten Wärmetauscherkessel (2.2), nebst Gasbrenner (2.3), mindestens einem Ausdehnungsgefäß mit Kondensatrückführung/Pufferbehälter (2.4) einschließlich Kondensatregelregelung (2.5) und mindestens einer Dosiereinheit (2.6) basiert, wobei Einheit (2.1) über Leitung (2.1.1) mit Einheit (2.2) verbunden ist, weiter Leitung (2.2.1) den Wärmetauscher (2.2) ausgangsseitig mit Einheit (2.4) verbindet, hier ggf. anfallendes Kondensat und/oder dampfförmiges STC (Kreisfahrweise) über eine Leitung (2.4.1) bzw. (2.4.2) der Leitung (2.1.1) wieder zugeführt werden kann und erhitztes dampfförmiges Chlorsilan bzw. STC (**B***) aus der Einheit (2.4) über Leitung (2.4.3) sowie eine Regeleinheit (2.6) und Leitung (2.6.1) bodenseitig (1.4) in die Reaktoreinheit (1) dosiert werden kann.

Figur 2 zeigt eine bevorzugte Ausführungsform eines gasbefeuerten Erhitzers für Chlorsilane zum Anfahren und gezielt gleichmäßigen Beaufschlagen eines Reaktors bis auf eine Temperatur von 650 °C bei einem Druck bis 55 bar, insbesondere für das Erhitzen eines im Wesentlichen STC-haltigen Chlorsilan-Feeds zum Beaufschlagen eines vorliegenden Wirbelschichtreaktors.

Der Chlorsilan-Erhitzer zum Anfahren und Beaufschlagung der Wirbelschichteinheit (1) bzw. (1.4) mit Chlorsilan (**B***), insbesondere mit einem STC enthaltenden Chlorsilan-Strom, kann aber auch wie in der noch nicht veröffentlichten Parallelanmeldung PCT/EP2008/053079 mit dem Titel "Verfahren zum gleitenden Temperieren chemischer Substanzen mit definierten Ein- und Ausgangstemperaturen in einem Erhitzer und Einrichtung zur Durchführung des Verfahrens" beschrieben ausgeführt sein bzw. erfolgen.

Der Wirbelschichtreaktor (1) bzw. (1.1) wird vorteilhaft über einen Fluidisieboden für die Zuführung von (**B** bzw. **B***) (1.4) beaufschlagt, wobei über den Volumenstrom und die Füllhöhe an Komponente (**A**) im Reaktor (1.1) das Wirbelbett in Gang gesetzt und die mittlere Verweilzeit des gasförmigen Produktgemischs im Reaktor im Wesentlichen geregelt wird. Die Fluiddynamik im Reaktor (1.1) kann vorteilhaft durch die Verwendung mindestens eines Siebbodens im Bereich oberhalb der Zuführung (1.4) im Reaktor oder einem Siebbodensystem, das Schüttungen und/oder Strömungseinbauten beinhalten kann, zusätzlich verbessert werden.

Vorzugsweise ist ein erfindungsgemäßer Wirbelschichtreaktor (1) mit mindestens einer Gasdosierungseinheit für H₂ (**C**) (1.5.4) und HCl- und/oder Chlorgas (**D**) (1.5.2) zur Versorgung der Zuführungen (1.5) ausgestattet.

Zur Befeuerung eines Erhitzers wie (2.2) bzw. (1.11) verwendet man geeigneterweise ein brennbares Gas (**E**), vorzugsweise Erdgas.

Die Abwärme aus der Brennkammereinheit (2.2), abgeführt über (2.2.2), kann vorteilhaft zum Vorwärmen von Gasströmen (**F**) und/oder mittels Wärmetauscher (1.5.5) für das Vorwärmen von (**C**) und/oder (**D**) enthaltenden Gasströmen vorteilhaft genutzt werden.

Weiter kann ein erfindungsgemäßer Wirbelschichtreaktor (1) vorteilhaft eine Staubabscheidung (1.7) umfassen, wobei die Stauabscheidung im Wesentlichen auf einer Filtration für das im Wirbelschichtreaktor erhaltene und am Kopf des Reaktors abgeführte Chlorsilan-haltige Produktgemisch basiert.

Zum Trennen des Produktgemischs in die Stoffströme (**G**) und (**H**) ist beim erfindungsgemäßen Wirbelschichtreaktor (1) geeigneterweise eine Trenneinheit (1.8) vorzusehen, wobei der Stoffstrom (**H**) als Kondensat anfällt und der Stoffstrom (**G**) gasförmig abgeführt wird. Dabei können nichtkondensierte Chlorsilane vorteilhaft zusammen mit dem Wasserstoff in den (Hydrier-)Reaktor (1.1) recycliert werden.

Die Anlagenteile des erfindungsgemäßen Wirbelschichtreaktors, vgl. u. a. Figur 1, einschließlich Chlorsilan- bzw. STC-Erhitzer, vgl. u. a. Figur 2, die mit Edukt-, Reaktions- bzw. Produktströmen in Kontakt stehen, können vorteilhaft beispielsweise
- aber nicht ausschließlich - mittels hochwarmfesten Schwarzstählen wie 1.7380, oder 1.5415, bevorzugt aber im höheren Temperaturbereich aus Edelstahllegierungen der Reihe 1.4306, 1.4404, 1.4571 oder 1.4876H ausgeführt sein.

Gegenstand der vorliegenden Erfindung ist ebenfalls ein Verfahren zur großtechnischen kontinuierlichen Herstellung eines Trichlorsilan (TCS) enthaltenden Produktstroms durch Umsetzung von im Wesentlichen Silicium (Si) (**A**), Chlorsilanen, insbesondere Siliciumtetrachlorid (STC), (**B**) und Wasserstoff (H₂) (**C**) und optional Chlorwasserstoffgas (HCl) und/oder Chlorgas (Cl₂) oder einem Gemisch aus Chlorwasserstoff- und Chlorgas (**D**) bei einem Druck von 25 bis 55 bar und einer Temperatur von 450 bis 650 °C, vorzugsweise 35 bis 45 bar und 550 bis 620 °C, insbesondere 38 bis 42 bär und 580 bis 610 °C, und optional in Gegenwart mindestens eines Katalysators, vor zugsweise auf der Basis mindestens eines Übergangsmetallelements, besonders vorzugsweise mindestens eines aus der Reihe Fe, Co, Ni, Cu, Ta, W, wie FeCl₂, CuCl, CuCl₂ und/oder der entsprechenden Metallsilicide, insbesondere eine Katalysatorsystems auf Kupfer-Basis, indem man
- einen Wirbelschichtreaktor gemäß einem der Ansprüche 1 bis 9 zu 1/8 bis 3/4 seines Reaktionsraumes mit partikelförmigem Silicium (**A**) beaufschlagt, wobei der Komponente (**A**) optional Katalysator beigemischt sein kann,
- bodenseitig einen definierten, mittels Gasbrenner befeuertem Wärmetauscher vorgeheizten Volumenstrom mindestens eines höheren Chlorsilans der Formel HₙSiCl₄₋ₙ mit n = 0, 1, 2 oder 3, d. h. im Wesentlichen bevorzugt Monochlorsilan, Dichlorsilan, Trichlorsilan und insbesondere Siliciumtetrachlorid oder ein Gemisch aus den zuvor genannten Chlorsilanen, (**B***) dosiert,
- in den Volumenstrom an Chlorsilan bzw. Siliciumtetrachlorid oder in den unteren Teil des Reaktors, jedoch unterhalb der Schütthöhe der Siliciumfüllung des Reaktors, an einer oder mehren Stellen, Wasserstoffgas (**C**) sowie optional Chlorwasserstoffgas und/oder Chlorgas (**D**) gezielt dosiert,
- das bei der Umsetzung erhaltene Produktgemisch am Reaktorkopf entnimmt und bei einer Temperaturen über 400 °C und einem Druck zwischen 25 bis 55 bar über eine Staubabscheidung führt,
- den im Wesentlichen von Staubanteilen befreiten Produktstrom abkühlt, vorzugsweise unter 35 bar und unter 150°C, Chlorsilane, insbesondere Trichlorsilan, (**H**) kondensiert, überschüssige Gasanteile (**G**) aus dem Produktstrom abführt, vorzugsweise in die Anlage recycliert, und
- den über den Produktstrom aus dem Reaktor entnommen Anteil an Silicium über mindestens eine Zuführung, die im oberen Teil des Reaktors oberhalb der Schütthöhe der Siliciumfüllung des Reaktors angeordnet ist, nachdosiert.

Beim erfindungsgemäßen Verfahren setzt man bevorzugt pro Mol SiCl₄ (**B**) 1 bis 5 Mol H₂ (**C**), besonders vorzugsweise 1,1 bis 2 Mol H₂, ein.

Besonders vörteilhaft setzt man für eine möglichst energieautarke Fahrweise beim erfindungsgemäßen Verfahren pro Mol H₂ (**C**) 0 bis 1 Mol HCl (**D**), vorzugsweise 0,001 bis 0,7 Mol HCl, besonders vorzugsweise 0,01 bis 0,5 Mol HCl, ganz besonders vorzugsweise 0,1 bis 0,4 Mol HCl, insbesondere 0,2 bis 0,3 Mol HCl, ein.

In überraschender Weise kann man ebenfalls pro Mol H₂ (**C**) 0 bis 1 Mol Cl₂ (**D**), vorzugsweise 0,001 bis 0,5 Mol Cl₂, besonders vorzugsweise 0,01 bis 0,4 Mol Cl₂, insbesondere 0,1 bis 0,3 Mol Cl₂, für eine möglichst energieautarke Fahrweise vorteilhaft einsetzen.

Geeigneterweise kann man dabei als Komponente (**D**) auch ein Gasgemisch aus HCl und Cl₂ in einem molaren Verhältnis HCl zu Cl₂ von 0 zu 1 bis 1 zu 0, vorzugsweise 0,01 bis 0,99 bis 0,99 zu 0,01, einsetzen.

Darüber hinaus sorgt man beim erfindungsgemäßen Verfahren vorteilhaft für eine mittlere Verweilzeit des Gas- bzw. Dampfgemischs im Reaktor von 0,1 bis 120 Sekunden, vorzugsweise von 0,5 bis 100 Sekunden, besonders vorzugsweise von 1 bis 60 Sekunden, ganz besonders vorzugsweise 3 bis 30 Sekunden, insbesondere 5 bis 20 Sekunden.

Gegenüber dem erfindungsgemäßen Verfahren war es bisher nach dem Stande der Technik erforderlich bei der endotherm verlaufenden Hydrierreaktion von STC zu TCS die notwendige Energiemenge über eine Elektroheizung dem Reaktor zuzuführen.

Ferner ist es vorteilhaft, wenn man beim erfindungsgemäßen Verfahren die Reaktionstemperatur für die Umsetzung im Reaktorinnenraum überwacht und diese bei einem konstanten Wasserstoff/STC-Verhältnis durch die Dosierung von HCl und/oder Cl₂ (**D**) regelt und/oder die Reaktionstemperatur für die Umsetzung im Reaktor (1.1) über die Einheiten (1.2) und (1.3) unter Verwendung des Mediums (**F**) sowie der Einheiten (1.9) bzw. (1.11) kontrolliert bzw. zusätzlich reguliert. Dabei kann die zu- bzw. äbzuführende Wärmemenge durch den Doppelmantel (1.2) und die innen liegende Wärmetauschereinheit (1.3.) unter Einbeziehung der Einheiten (1.9) und (1.11) vorteilhaft reguliert werden. Dabei kann man als Medium (**F**) beispielsweise -aber nicht ausschließlich- Luft oder ein Inertgas wie Stickstoff oder ein Edelgas wie Argon verwenden.

Ferner setzt man beim erfindungsgemäßen Verfahren als Silicium (**A**) vorteilhaft ein - in der Regel handelsübliches - metallurgisches Silicium mit einer mittleren Partikelgröße von 10 bis 3000 µm, vorzugsweise 50 bis 2000 µm, besonders vorzugsweise 80 bis 1500 µm, ganz besonders vorzugsweise 100 bis 1000 µm, insbesondere 120 bis 500 µm, ein. Dabei besitzt das hier eingesetzte Silicium (**A**) bevorzugt eine Reinheit größer gleich 80 %, besonders vorzugsweise größer gleich 90 %, insbesondere größer gleich 98 %.

Dabei kann man dem Silicium (**A**) mindestens einen Katalysator vorteilhaft bemischt, indem man das Silicium und das Katalysatorsystem intensiv vermischt, insbesondere indem man das Silicium und den Katalysator zuvor gemeinsam mahlt. Dazu kann man die Fachmann an sich bekannte Mahlverfahren verwenden Darüber hinaus kann man dem Silicium bzw. bei der Herstellung eines Gemischs aus Silicium und Katalysator zumindest anteilig Staub (**J**) aus der Einheit (1.7.) vorteilhaft recyclieren. In der Regel führt man das erfindungsgemäße Verfahren wie folgt aus:

Der Reaktor sowie die Edukt bzw. Produkt führenden Leitungen der Anlage werden vor Inbetriebnahme in der Regel getrocknet sowie inertisiert, beispielsweise indem man die Anlage mit einem vorgewärmten Inertgas, wie Argon oder Stickstoff spült bis am Austritt der Anteil an Sauerstoff gegen Null geht.

Dem erfindungsgemäßen Wirbelschichtreaktor (1) wird für das Anfahren und anschließende gleichmäßige und kontinuierliche Beaufschlagen mit einem erhitzten Eduktstrom (**B***) bevorzugt eine Einheit (2), d. h. ein gasbefeuerter Chlorsilan-Erhitzer mit Kreislauf, vorgeschaltet, worin der im Wesentlichen STC enthaltenden Eduktstrorm (**B**) von etwa 20 °C auf eine Temperatur bis 650 °C und einem Druck 25 bis 55 bar erhitzt werden kann und die Einheit (2) neben Regeleinheiten und druckfesten Leitungen im Wesentlichen auf einer s. g. Feed-Pumpe (2.1), auf einem gasbefeuerten Wärmetauscherkessel (2.2) mit Gasbrenner (2.3) und Ausdehnungsgefäß mit Kondensatrückführung (2.4) basiert, wobei die heißen Rauchgase im Brennkessel mindestens eine druckfeste Leitung umfließen, die zur Führung des Chlorsilan- bzw. STC-Stroms (**B**) dient. Ferner besteht diese Einheit aus einer geeigneten Anordnung für eine Kreisfahrweise für ein gleichmäßiges Erhitzen des Chlorsilan- bzw. STC-Stroms, vgl. Fig. 2. Dazu kann beispielsweise das SiCl₄, welches geeigneterweise aus einem Tank entnommen wird, mittels einer Kolbenmembranpumpe (2.1) ca. 40 bar verdichtet werden. Über Leitung (2.1.1) kann das SiCl₄ so in die ersten Heizschlangenabschnitte des mit Erdgas befeuerten Erhitzers (2.2) gelangen. Darüber befindet sich geeigneterweise ein Füllstand gesteuertes Ausdehnungsgefäß, das eine anfallende Chlorsilan- bzw. STC-Flüssigphase im Kreislauf über die hinsichtlich des vorherrschenden Drucks angepasste Reglereinheit (2.5) wieder zurück in den Chlorsilan- bzw. STC-Strom der Leitung (2.1.1) führt. Aus dem Gasraum des Ausdehnungsgefäßes kann gezielt wohl definiert aufgeheiztes, dampfförmiges Chlorsilan bzw. STC (**B***) entnommen und als Feed über die Reglereinheit (2.6) und der Leitung (2.6.1) sowie der Chlorsilan-Zuführung (1.4) dem Reaktor (1.1) vorteilhaft in einem wohl dosierten, vorzugsweise kontinuierlichen Volumenstrom zugeführt werden. So dient der Pufferbehälter (2.4) vorteilhaft auch dazu, Druckschwankungen auszugleichen und das überhitzte Chlorsilan bzw. SiCl₄ temperatur- sowie druckgeregelt für den kontinuierlichen Betrieb des Wirbelschichtreaktors (1) bereitzustellen. Auch kann man einen Chlorsilan-Strom, insbesondere einen STC-Strom, der in einem Parallel- oder Folgeprozess anfällt, zumindest anteilig als Feed-Strom (B) für den vorliegenden Chlorsilan-Erhitzer vorteilhaft nutzen. Brennkessel und Pufferkessel des Chlorsilan-Erhitzers sowie die zugehörigen Leitungen zur Führung von Chlorsilanen, insbesondere von Tetrachlorsilan, sind in der Regel aus hochwarmfesten Schwarzstählen wie 1.7380, oder 1.5415, bevorzugt aber im höheren Temperaturbereich aus Edelstahllegierungen der Reihe 1.4306, 1.4404, 1.4571 oder 1.4876H. Eine solche Erhitzervorrichtung für Chlorsilane kann in besonders vorteilhafter Weise in einer Anlage zur Herstellung von Trichlorsilan bzw. von besonders reinem polykristallinem Silicium verwendet werden. So ermöglicht der Einsatz einer solchen gasbefeuerten Chlorsilan-Erhitzereinheit, in sbesondere mit Erdgasbrenner, in besonders wirtschaftlicher Weise die Einsparung einer kostenintensiven elektrischen Aufheizung der Chlorsilan- bzw. STC-Phase; das betrifft sowohl die Anschaffungs- als auch insbesondere die hohen Betriebskosten eines elektrisch betriebenen Erhitzers. Im Gegensatz zu elektrisch beheizten Erhitzern kann das mit Erd- bzw. Heizgasen direkt befeuerte Erhitzersystem schneller auf Lastwechsel reagieren, da lang andauernde Aufheiz- und Nachheizeffekte entfallen. Bei einer besonders günstig ausgeführten Bauform des Erhitzers können die heißen Abgase auch mehrfach über den Erhitzer geführt werden, um weitere Einsparungen an Betriebskosten zu erzielen. Ferner kann bei Betriebsunterbrechung bzw. Abbruch der Reaktion in einen Kreislaufbetrieb geschaltet werden, der es ermöglicht ohne Zeitverlust für lange Aufheizzeiten den Kessel bzw. den Erhitzer in Bereitschaft zu halten. Ein so, vorwiegend auf überkritische Bedingungen erhitzter Chlorsilan- bzw. STC-Strom (**B***) wird vorteilhaft in den Wirbelbettreaktor (1) dosiert, wobei der Reaktor (1.1) mit gemahlenem Siliziumpulver (**A**) gefüllt ist, vorzugsweise zu 1/8 bis ¾ des Reaktorvolumens, besonders vorzugsweise zu 1/4 bis 2/3, insbesondere zu 1/3 bis ½, und das bei der gezielter Beaufschlagung mit dem erhitzen Chlorsilan-Strom verwirbelt (kurz auch Wirbelschicht oder Wirbelbett genannt). Beim erfindungsgemäßen Verfahren findet die Reaktion in der Regel im Temperaturbereich zwischen 400° und 650° und einem Druck von 25 bis 55 bar statt. Der erfindungsgemäße

Reaktor verfügt vorteilhaft über einen Doppelmantel mit innen aufgeschweißten Rippen. Diese erhöhen die Wärmeübertragungsfläche und sorgen gleichzeitig für eine geführte Strömung des Medium. Über einen Ventilator ist es möglich Luft oder inerte Gase (**F**) durch diesen Doppelmantel zu fördern. Reaktoren mit größerem Durchmesser können zusätzlich geeignete Einbauten, die ebenfalls mit Rippen versehen und von dem Gas durchströmt werden, enthalten. Dieses Gas lässt sich vorteilhaft durch einen Gasbrenner, vgl. (1.11), auf jede gewünschte Temperatur einstellen. Damit wird es möglich, den Reaktor (1.1) beim Anfahren sehr gleichmäßig und Material schonend auf die notwendige Betriebstemperatur aufzuheizen. Dies kann man erfindungsgemäß in wesentlich wirtschaftlicherer Weise bewerkstelligen als mit einer Elektroheizung. Nach Erreichen der Betriebstemperatur wird durch gezielt Zugabe bzw. Dosierung von Wässerstoff sowie optional HCl- und/oder Cl₂-Gas in das Siliciumbett bei weiterer Energiezuführung mittel Wärmeträgermedium (**F**), das durch Gasbefeuerung aufgeheizt wird, die Hydrierreaktion gestartet. So kann insbesondere durch die Zugabe von HCl (Gas) die exotherme Hydrochlorierreaktion des Siliciums gestartet werden. Dabei kann die Zugabe von HCl gezielt soweit gesteigert werden, bis ein Temperaturanstieg im Reaktor zu beobachten ist. So kann in vorteilhafter Weise eine praktisch energieautarke Hydrierung von vorliegendem STC durchgeführt werden. Die Brennerleistung kann in der Regel nach anspringen der Reaktion zurückgenommen und die Reaktortemperierung vom Heiz- in den Kühlbetrieb übergehen. Durch die Kühlung kann sichergestellt werden, dass es durch lokale Überhitzungen nicht zu Schädigungen des Reaktormaterials kommt. Ferner kann durch die Kühlung insbesondere im Raum oberhalb der Wirbelschicht im Reaktorinneren eine Rückreaktion zu STC vorteilhaft vermindert werden. Durch die Reaktion entstehendes Produktgemisch kann über Kopf des Reaktors abgeführt und geeigneterweise mittels Staubfilter im Wesentlichen von Si- sowie gegebenenfalls Katalysatorstaub befreit werden. Der gesammelte Staub (**J**) kann als Zuschlag über Komponente (**A**) recycliert werden. Nachfolgend kühlt man geeigneterweise den Produktstrom ab, wobei man Gasphase und TCS-/STC-Flüssigphase (**H**) erhält. Die Gasphase (**G**) kann man vorteilhaft wieder über eine gesonderte Zuführung, vorzugsweise im unteren Teil des Reaktors, recyclieren. Die Auftrennung des Produktstrom (**H**) in TCS und recyclierbarem STC kann beispielsweise durch eine Destillation erfolgen. Der im Produktstrom über Kopf des Reaktors geführte Anteil an Silicium bzw. verbrauchtem Silicium wird geeigneterweise über die Feststoffaufgabe (1.6.) in den Reaktor nachdosiert.

Gegenstand der vorliegenden Erfindung ist somit auch die Verwendung einer erfindungsgemäßen Vorrichtung für die Hydrierung höher chlorierter Silane der Formel HₙSiCl₄₋ₙ mit n = 0, 1, 2 oder 3, vorzugsweise zur Herstellung von niedriger chlorierten Chlorsilanen der Formel HₙSiCl₄₋ₙ mit n = 1, 2, 3 oder 4, insbesondere zur Herstellung von Trichlorsilan.

Besonders vorteilhaft kann man eine erfindungsgemäße Vorrichtung (nachfolgend auch kurz Wirbelschichtstufe genannt) in einem Verbundsystem zur Herstellung von Chlor- bzw. Organosilanen, pyrogener Kieselsäure und/oder hochreinem Silicium für Solar- und Elektronikanwendungen verwenden.

So ist ebenfalls Gegenstand der vorliegenden Erfindung die Verwendung einer erfindungsgemäßen Vorrichtung (nachfolgend auch kurz Wirbelschichtstufe genannt) in einem Verbundsystem zur an sich bekannten Herstellung von Silanen sowie Organosiloxanen, insbesondere Chlor- bzw. Organosilanen, wie Monosilan, Monochlorsilan, Dichlorsilan, Trichlorsilan, Siliciumtetrachlorid, Vinyltrichlorsilan, substituierte oder unsubstituierte C3-18-Alkylchlorsilane, wie 3-Chlorpropyltrichlorsilan, Propyltrichlorsilan, Trimethoxysilan, Triethoxysilan, Tetramethoxysilan, Tetraethoxysilan, Vinyltrialkoxysilan, substituierte oder unsubstituierte C3-18-Alkylalkoxysilane, wie Propyltrialkoxysilan, Octyltrialkoxysilane, Hexadecyltrialkoxysilan, Chloralkylalkoxysilane, wie 3-Chlorpropyltrialkoxysilan, Fluoralkylalkoxysilane, wie Tridecafluor-1,1,2,2-tetrahydrooctyltrialkoxysilan, Aminoalkylalkoxysilane, Methacryloxyalkylalkoxysilane, Glycidyloxyalkylalkoxysilane, Polyetheralkylalkoxysilane, wobei Alkoxy jeweils z. B. für Methoxy sowie Ethoxy, steht, um nur einige zu nennen, sowie Folgeprodukte daraus wobei man Chlorsilan-Ströme, insbesondere STC-haltige Ströme, zumindest anteilig in die Prozessstufen zur Herstellung pyrogener Kieselsäure und zur Herstellung von Chlorsilanen in der Wirbelschicht recycliert.

Bevorzugt verwendet man in der erfindungemäßen Wirbelschichtstufe erhaltenes und nachgereinigtes Trichlorsilan zur Herstellung von Monosilan durch Dismutierung, wobei man das bei der Dismutierung anfallende Siliciumtetrachlorid zumindest anteilig in den Monosilan-Prozess zurückführt und/oder es zumindest anteilig dem STC-Erhitzer des erfindungsgemäßen Wirbelschichtreaktors zuführt. So erhaltenes Monosilan kann man vorteilhaft zur Herstellung von polykristallinem Silicium (solar grade) durch thermische Zersetzung von Monosilan nutzen. Ferner kann man den bei der thermischen Zersetzung des Monosilans anfallenden Wasserstoff im Rahmen des Verbundsystems vorteilhaft in die erfindungsgemäße Wirbelschichtstufe zurückführt.

So känn erfindüngsgemäß eine Vorrichtung und ein im Wesentlichen energieautarkes Verfahren zur Herstellung von Trichlorsilan ausgehend von metallurgischem Silicium, Siliciumtetrachlorid und Wasserstoff sowie optional HCl und/oder Cl₂ und optional in Gegenwart eines Katalysators in besonders wirtschaftlicher Weise bei gleichzeitig hoher Ausbeute und bei schonender Fahrweise für das Material des Reaktors bereitgestellt und besonders vorteilhaft - wie zuvor aufgezeigt - verwendet werden.

### Legende zu den Figuren 1 und 2:

| | |
|---|---|
| **1** | Wirbelschichtreaktor |
| **1.1** | Reaktor (-mantel) |
| **1.2** | Wärmetauschermantel |
| **1.3** | Wärmetauschereinbauten |
| **1.4** | Chlorsilan-Zuführung (**B bzw. B***) |
| **1.5** | Zuführung (Gasdosierung) für Komponenten (**C**) und/oder (**D**) |
| **1.6** | Feststoffzuführung (Dosierung) für Komponente (**A**) |
| **1.7** | Staubfilter |
| **1.8** | Kondensator |
| **1.9** | Ventilator (Gebläse) |
| **1.10** | Heißgasrekuperator |
| **1.11** | gasbefeuerter Wärmetauscher (Brennkammer) |
| | |
| **2** | Chlorsilan-Erhitzer mit Kreislauf (Erhitzer) |
| **2.1** | (Flüssigkeits-)Pumpe für Komponente (**B**) |
| **2.2** | gasbefeuerter Wärmetauscherkessel (Brennkammer) |
| **2.3** | Gasbrenner |
| **2.4** | Ausdehnungsgefäß mit Kondensatrückführung / Pufferbehälter |
| **2.5** | Kondensatregelregelung (Kondensatregelventil) |
| **2.6** | Druckregelventilventil (Dosiereinheit für erhitzen Chlorsilanstrom) |

## Patentansprüche

1. Wirbelschichtreaktor zur kontinuierlichen Hydrierung von höheren Chlorsilanen der Formel HₙSiCl₄₋ₙ mit n = 0, 1, 2 oder 3 in Gegenwart von Silicium, insbesondere zur Herstellung von Chlorsilanen durch Umsetzung von im Wesentlichen Silicium (**A**), Siliciumtetrachlorid (**B**), Wasserstoff (**C**) sowie optional Chlorwasserstoffgas und/oder Chlorgas (**D**) und optional in Gegenwart eines Katalysators bei einem Druck von 25 bis 55 bar und einer Temperatur von 450 bis 650 °C,
basierend der Wirbelschichtreaktoreinheit (1) auf
- einem Reaktormantel (1.1) mit einer Ummantelung (1.2) zum Kühlen oder Erwärmen des Reaktors sowie einer parallel zur Reaktorlängsachse und im Reaktorinnenraum angeordneten Wärmetauschereinheit (1.3), wobei die Einheiten (1.2) und (1.3) mit einem gasförmigen Medium (**F**) durchströmt werden können und das Medium (**F**) mittels gasbefeuertem Wärmetauscher (1.11) erwärmt werden kann,
- mindestens eine bodenseitige Zuführung (1.4) für Chlorsilan- bzw. STC-haltigen Eduktstrom (**B***),
- mindestens eine Zuführung (1.5) für einen oder mehrere gasförmige Einsatzstoffe aus der Reihe (**C**) und (**D**),
- mindestens eine Zuführung (1.6) für partikelförmiges Silicium (**A**), dem gegebenenfalls Katalysator beigemischt ist, und
- eine Abführung und Trennung für Produkt (**G, H**) über Reaktorkopf, Staubfilter (1.7) und Kondensator (1.8).

2. Wirbelschichtreaktor nach Anspruch 1,
**gekennzeichnet durch**
einen Wärmetauscher (1.10) für die Nutzung vorhandener Abwärmen zum Vorwärmen von Gasströmen (**F**).

3. Wirbelschichtreaktor nach Anspruch 1 oder 2,
**gekennzeichnet durch**
einen Wärmetauscher (1.5.5) für die Nutzung vorhandener Abwärmen zum Vorwärmen von (**C**) und/oder (**D**) enthaltenden Gasströmen.

4. Wirbelschichtreaktor nach einem der Ansprüche 1 bis 3,
**gekennzeichnet durch**
eine Einheit (2) für das Anfahren und gleichmäßige Beaufschlagen der Wirbelschichtreaktoreinheit (1) mit einem erhitzten Eduktstrom (**B***), worin der Chlorsilan, insbesondere STC, enthaltende Eduktstrom (**B**) von etwa 20 °C, d. h. Umgebungstemperatur, auf eine Temperatur bis 650 °C bei einem Druck von 25 bis 55 bar erhitzt werden kann und die Einheit (2) auf einer Chlorsilan-Zuführung (**B**) mittels Förderpumpe (2.1), einem gasbefeuerten Wärmetauscherkessel (2.2), nebst Gasbrenner (2.3), mindestens einem Ausdehnungsgefäß / Pufferbehälter (2.4) und mindestens einer Dosiereinheit (2.6) basiert, wobei Einheit (2.1) über Leitung (2.1.1) mit Einheit (2.2) verbunden ist, weiter Leitung (2.2.1) den Wärmetauscher (2.2) ausgangsseitig mit Einheit (2.4) verbindet, hier ggf. anfallendes Kondensat und/oder dampfförmiges Chlorsilan, insbesondere STC, (Kreisfahrweise) über eine Leitung (2.4.1) bzw. (2.4.2) der Leitung (2.1.1) wieder zugeführt werden kann und erhitztes dampfförmiges Chlorsilan, insbesondere STC, (B*) aus der Einheit (2.4) über Leitung (2.4.3) sowie eine Regeleinheit (2.6) und Leitung (2.6.1) bodenseitig (1.4) in die Reaktoreinheit (1) dosiert werden kann.

5. Wirbelschichtreaktor nach einem der Ansprüche 1 bis 4,
**gekennzeichnet durch**
einen Fluidisieboden für die Zuführung von (**B***) (1.4.) in den Reaktor (1.1).

6. Wirbelschichtreaktor nach einem der Ansprüche 1 bis 5,
**gekennzeichnet durch**
mindestens eine Gasdosierungseinheit für H₂ (**C**) (1.5.4) und HCl- und/oder Chlorgas (**D**) (1.5.2) zur Versorgung der Zuführungen (1.5).

7. Wirbelschichtreaktor nach einem der Ansprüche 1 bis 6,
**gekennzeichnet durch**
eine Staubabscheidung (1.7), wobei die Stauabscheidung im Wesentlichen auf einer Filtration für das im Wirbelschichtreaktor erhaltene und am Kopf des Reaktors abgeführte Chlorsilangemisch basiert.

8. Wirbelschichtreaktor nach einem der Ansprüche 1 bis 7,
**gekennzeichnet durch**
Trenneinheit (1.8) zum Trennen von Stoffströmen (**G**) und (**H**), wobei der Stoffstrom (**H**) als Kondensat anfällt und der Stoffstrom (**G**) gasförmig abgeführt wird.

9. Wirbelschichtreaktor nach einem der Ansprüche 1 bis 8,
**gekennzeichnet durch**
einen Reaktormantel (1.1) mit einem Innendurchmesser von 100 mm bis 2000 mm und einer Höhe von 5 m bis 25 m.

10. Verfahren zur kontinuierlichen Herstellung eines Trichlorsilan (TCS) enthaltenden Produktstroms durch Umsetzung von im Wesentlichen Silicium (Si) (**A**), Siliciumtetrachlorid (STC) (**B**) und Wasserstoff (H₂) (**C**) und optional Chlorwasserstoffgas (HCl) und/oder Chlorgas (Cl₂) oder einem Gemisch aus Chlorwasserstoff- und Chlorgas (**D**) bei einem Druck von 25 bis 55 bar und einer Temperatur von 450 bis 650 °C und optional in Gegenwart mindestens eines Katalysators,
indem man
- einen Wirbelschichtreaktor gemäß einem der Ansprüche 1 bis 9 zu 1/8 bis 3/4 seines Reaktionsraumes mit partikelförmigem Silicium (**A**) beaufschlagt, wobei der Komponente (**A**) optional Katalysator beigemischt sein kann,
- bodenseitig einen definierten, mittels Gasbrenner befeuertem Wärmetauscher vorgeheizten Volumenstrom an Siliciumtetrachlorid (**B***) dosiert,
- in den Volumenstrom an Siliciumtetrachlorid oder in den unteren Teil des Reaktors, jedoch unterhalb der Schütthöhe der Siliciumfüllung des Reaktors, an einer oder mehren Stellen, Wasserstoffgas (**C**) sowie optional Chlorwasserstoffgas und/oder Chlorgas (**D**) gezielt dosiert,
- das bei der Umsetzung erhaltene Produktgemisch am Reaktorkopf entnimmt und bei einer Temperatur über 400 °C und einem Druck von 25 bis 55 bar über eine Staubabscheidung führt,
- den im Wesentlichen von Staubanteilen befreiten Produktstrom abkühlt, Chlorsilane kondensiert (**H**), überschüssige Gasanteile (**G**) aus dem Produktstrom abführt, und
- den über den Produktstrom aus dem Reaktor entnommen Anteil an Silicium (**A**) über mindestens eine Zuführung, die im oberen Teil des Reaktors oberhalb der Schütthöhe der Siliciumfüllung des Reaktors angeordnet ist, nachdosiert.

11. Verfahren nach Anspruch 10,
**dadurch gekennzeichnet,**
**dass** man pro Mol SiCl₄ (**B**) 1 bis 5 Mol H₂ (**C**) einsetzt.

12. Verfahren nach Anspruch 10 oder 11,
**dadurch gekennzeichnet,**
**dass** man pro Mol H₂ (**C**) 0 bis 1 Mol HCl (**D**) einsetzt.

13. Verfahren nach Anspruch 10 oder 11,
**dadurch gekennzeichnet,**
**dass** man pro Mol H₂ (**C**) 0 bis 1 Mol Cl₂ (**D**) einsetzt.

14. Verfahren nach einem der Ansprüche 10 bis 13,
**dadurch gekennzeichnet,**
**dass** man als Komponente (**D**) ein Gasgemisch aus HCl und Cl₂ in einem molaren Verhättnis HCL zu Cl₂ von 0 zu 1 bis 1 zu 0 einsetzt.

15. Verfahren nach einem der Ansprüche 10 bis 14,
**dadurch gekennzeichnet,**
**dass** man die Reaktionstemperatur für die Umsetzung im Reaktorinnenraum überwacht und diese bei einem konstanten Wasserstoff/STC-Verhältnis durch die Dosierung von HCl und/oder Cl₂ (**D**) regelt und/oder die Reaktionstemperatur für die Umsetzung im Reaktor (1.1) über die Einheiten (1.2) und (1.3) unter Verwendung des Mediums (**F**) sowie der Einheiten (1.9) bzw. (1.11) kontrolliert bzw. zusätzlich reguliert.

16. Verfahren nach einem der Ansprüche 10 bis 15,
**dadurch gekennzeichnet,**
**dass** man als Silicium (**A**) ein metallurgisches Silicium mit einer mittleren Partikelgröße vom 10 bis 3000 µm einsetzt.

17. Verfahren nach einem der Ansprüche 10 bis 16,
**dadurch gekennzeichnet,**
**dass** man dem Silicium (**A**) mindestens einen Katalysator bemischt, wobei das Silicium und das Katalysatorsystem intensiv vermischt sind.

18. Verwendung einer Vorrichtung nach einem der Ansprüche 1 bis 9 für die Hydrierung höher chlorierter Silane der Formel HₙSiCl₄₋ₙ mit n = 0, 1, 2 oder 3.

19. Verwendung einer Vorrichtung (nachfolgend auch kurz Wirbelschichtstufe genannt) nach einem der Ansprüche 1 bis 9 oder einer Verwendung nach Anspruch 18 in einem Verbundsystem zur Herstellung von Silanen, Organosiloxanen, gefällter sowie pyrogener Kieselsäure und/oder hochreinem Silicium.

20. Verwendung nach Anspruch 19, wobei man im Verbundsystem anfallende höher chlorierte Silane oder entsprechende Gemische höher chlorierter Silane zumindest anteilig in die Prozessstufen zur Herstellung pyrogener Kieselsäure und zur Herstellung von Chlorsilanen in der Wirbelschicht recycliert.

21. Verwendung nach Anspruch 19 oder 20, wobei man in der Wirbelschichtstufe erhaltenes Trichlorsilan, nochmals reinigt, zur Herstellung von Monosilan durch Dismutierung einsetzt und man das bei der Dismutierung anfallende Siliciumtetrachlorid zumindest anteilig in den Prozess zurückführt, indem man es zumindest anteilig dem Chlorsilan- bzw. STC-Erhitzer zuführt.

22. Verwendung nach einem der Ansprüche 19 bis 21, wobei man zur Herstellung von polykristallinem Silicium (solar grade) durch thermische Zersetzung von Monosilan das Monosilan durch Dismutierung aus dem Trichlorsilan gewinnt, das unter Verwendung der Wirbelschichtstufe erhalten wird.

23. Verwendung nach einem der Ansprüche 19 bis 22, wobei man den bei der thermischen Zersetzung von Monosilan anfallenden Wasserstoff im Rahmen des Verbundsystems in die Wirbelschichtstufe zurückführt.

## Claims

1. Fluidized bed reactor for the continuous hydrogenation of higher chlorosilanes of the formula HₙSiCl₄₋ₙ where n = 0, 1, 2 or 3 in the presence of silicon, in particular for the preparation of chlorosilanes by reacting substantially silicon (**A**), silicon tetrachloride (**B**), hydrogen (**C**) and optionally hydrogen chloride gas and/or chlorine gas (**D**) and optionally in the presence of a catalyst at a pressure of from 25 to 55 bar and a temperature of from 450 to 650°C,
the fluidized bed reactor unit (1) being based on
- a reactor casing (1.1) having a jacket (1.2) for cooling or warming the reactor and a heat exchanger unit (1.3) arranged parallel to the longitudinal axis of the reactor and in the reactor interior, it being possible for a gaseous medium (**F**) to flow through the units (1.2) and (1.3) and it being possible for the medium (**F**) to be heated by means of gas-fired heat exchangers (1.11),
- at least one bottom feed (1.4) for chlorosilane- or STC-containing starting material stream (**B***),
- at least one feed (1.5) for one or more gaseous starting materials from the series (**C**) and (**D**),
- at least one feed (1.6) for particulate silicon (**A**) with which, if desired, catalyst is mixed, and
- removal and separation for product (**G, H**) via reactor top, dust filter (1.7) and condenser (1.8).

2. Fluidized bed reactor according to Claim 1, **characterized by** a heat exchanger (1.10) for the use of available waste heat for preheating gas streams (**F**).

3. Fluidized bed reactor according to Claim 1 or 2, **characterized by** a heat exchanger (1.5.5) for the use of available waste heat for preheating (**C**) and/or (**D**) containing gas streams.

4. Fluidized bed reactor according to any one of Claims 1 to 3, **characterized by**
a unit (2) for start-up and uniform supply of the fluidized bed reactor unit (1) with a heated starting material stream (**B***), wherein the chlorosilane-containing, in particular STC-containing, starting material stream (**B**) can be heated from about 20°C, i.e. ambient temperature, to a temperature up to 650°C at a pressure of from 25 to 55 bar and the unit (2) is based on a chlorosilane feed (**B**) by means of a feed pump (2.1), a gas-fired heat exchanger vessel (2.2), together with gas burner (2.3), at least one expansion vessel/buffer container (2.4) and at least one metering unit (2.6), unit (2.1) being connected via pipe (2.1.1) to unit (2.2), furthermore pipe (2.2.1) connecting the heat exchanger (2.2) on the exit side to unit (2.4), it being possible here to recycle any resulting condensate and/or chlorosilane vapor, in particular STC vapor, (circulating procedure) via a pipe (2.4.1) or (2.4.2) to the pipe (2.1.1) and it being possible to meter heated chlorosilane vapor, in particular STC vapor, (B*) from the unit (2.4) via pipe (2.4.3) and a control unit (2.6) and pipe (2.6.1) into the bottom (1.4) of the reactor unit (1).

5. Fluidized bed reactor according to any one of Claims 1 to 4, **characterized by** a fluidizing base for feeding (**B***) (1.4) into the reactor (1.1).

6. Fluidized bed reactor according to any one of Claims 1 to 5, **characterized by** at least one gas metering unit for H₂ (**C**) (1.5.4) and HCl and/or chlorine gas (**D**) (1.5.2) for supplying the feeds (1.5).

7. Fluidized bed reactor according to any one of Claims 1 to 6, **characterized by** a dust separation (1.7), the dust separation being substantially based on filtration for the chlorosilane mixture obtained in the fluidized bed reactor and removed at the top of the reactor.

8. Fluidized bed reactor according to any one of Claims 1 to 7, **characterized by** separation unit (1.8) for separating material streams (**G**) and (**H**), the material stream (**H**) being obtained as condensate and the material stream (**G**) being removed in gaseous form.

9. Fluidized bed reactor according to any one of Claims 1 to 8, **characterized by** a reactor casing (1.1) having an internal diameter of from 100 mm to 2000 mm and a height of from 5 m to 25 m.

10. Process for the continuous preparation of a trichlorosilane (TCS)-containing product stream by reacting substantially silicon (Si) (**A**), silicon tetrachloride (STC) (**B**) and hydrogen (H₂) (**C**) and optionally hydrogen chloride gas (HCl) and/or chlorine gas (Cl₂) or a mixture of hydrogen chloride and chlorine gas (**D**) at a pressure of from 25 to 55 bar and a temperature of from 450 to 650°C and optionally in the presence of at least one catalyst,
by
- supplying a fluidized bed rector according to any one of Claims 1 to 9 to an extent of 1/8 to 3/4 of its reaction space with particulate silicon (**A**), it being possible optionally to mix catalyst with the component (**A**),
- metering at the bottom a defined volume stream, preheated by means of a gas burner-fired heat exchanger, of silicon tetrachloride (**B***),
- metering hydrogen gas (**C**) and optionally hydrogen chloride gas and/or chlorine gas (**D**) in a targeted manner into the volume stream of silicon tetrachloride or into the lower part of the reactor, but below the height of the silicon bed of the reactor, at one or more points,
- removing the product mixture obtained in the reaction at the top of the reactor and passing it via a dust separation at a temperature above 400°C and a pressure of from 25 to 55 bar,
- cooling the product stream substantially freed from dust fractions, condensing (**H**) chlorosilanes, removing excess gas fractions (**G**) from the product stream, and
- subsequently metering the silicon fraction (**A**) removed via the product stream from the reactor by at least one feed which is arranged in the upper part of the reactor above the height of the silicon bed of the reactor.

11. Process according to Claim 10, **characterized in that** from 1 to 5 mol of H₂ (**C**) are used per mole of SiCl₄ (**B**).

12. Process according to Claim 10 or 11, **characterized in that** from 0 to 1 mol of HCl (**D**) is used per mole of H₂ (**C**).

13. Process according to Claim 10 or 11, **characterized in that** from 0 to 1 mol of Cl₂ (**D**) is used per mole of H₂ (**C**).

14. Process according to any one of Claims 10 to 13, **characterized in that** a gas mixture comprising HCl and Cl₂ in a molar ratio of HCl to Cl₂ of from 0:1 to 1:0 is used as component (**D**).

15. Process according to any one of Claims 10 to 14, **characterized in that** the reaction temperature for the reaction in the reactor interior is monitored and this is regulated at a constant hydrogen/STC ratio by the metering of HCl and/or Cl₂ (**D**) and/or the reaction temperature for the reaction in the reactor (1.1) is controlled or additionally regulated via the units (1.2) and (1.3) with the use of the medium (**F**) and of the units (1.9) or (1.11).

16. Process according to any one of Claims 10 to 15, **characterized in that** a metallurgical silicon having a mean particle size of from 10 to 3000 µm is used as silicon (**A**).

17. Process according to any one of Claims 10 to 16, **characterized in that** at least one catalyst is mixed with the silicon (**A**), the silicon and the catalyst system being thoroughly mixed.

18. Use of an apparatus according to any one of Claims 1 to 9 for the hydrogenation of higher chlorinated silanes of the formula HₙSiCl₄₋ₙ where n = 0, 1, 2 or 3.

19. Use of an apparatus (also referred to below as fluidized bed stage for short) according to any one of Claims 1 to 9 or the use according to Claim 18 in an integrated system for the preparation of silanes, organosiloxanes, precipitated and pyrogenic silica and/or high-purity silicon.

20. Use according to Claim 19, higher chlorinated silanes or corresponding mixtures of higher chlorinated silanes occurring in the integrated system being at least proportionately recycled into the process stages for the preparation of pyrogenic silica and for the preparation of chlorosilanes in the fluidized bed.

21. Use according to Claim 19 or 20, trichlorosilane obtained in the fluidized bed stage being used, after further purification, for the preparation of monosilane by dismutation, and the silicon tetrachloride obtained in the dismutation being recycled at least proportionately into the process by feeding it at least proportionately to the chlorosilane or STC heater.

22. Use according to any one of Claims 19 to 21, in which, for the preparation of polycrystalline silicon (solar grade) by thermal decomposition of monosilane, the monosilane is obtained by dismutation from the trichlorosilane which is obtained with the use of the fluidized bed stage.

23. The use according to any one of claims 19 to 22, the hydrogen occurring in the thermal decomposition of monosilane being recycled into the fluidized bed stage in the integrated system.

## Revendications

1. Réacteur à lit fluidisé pour l'hydrogénation continue de chlorosilanes supérieurs de formule HₙSiCl₄₋ₙ avec n = 0, 1, 2 ou 3 en présence de silicium, notamment pour la fabrication de chlorosilanes par réaction principalement de silicium (A), de tétrachlorure de silicium (B), d'hydrogène (C), ainsi qu'éventuellement de chlorure d'hydrogène gazeux et/ou de chlore gazeux (D), et éventuellement en présence d'un catalyseur, à une pression de 25 à 55 bar et à une température de 450 à 650 °C,
l'unité de réacteur à lit fluidisé (1) étant à base de :
- une enveloppe de réacteur (1.1) comprenant une gaine (1.2) pour le refroidissement ou le chauffage du réacteur, ainsi qu'une unité d'échangeur de chaleur (1.3) agencée en parallèle à l'axe longitudinal du réacteur et dans l'espace intérieur du réacteur, les unités (1.2) et (1.3) pouvant être traversées par un milieu gazeux (F) et le milieu (F) pouvant être chauffé par un échangeur de chaleur à gaz (1.11),
- au moins une alimentation du côté du fond (1.4) pour le courant de réactifs contenant du chlorosilane ou du STC (B*),
- au moins une alimentation (1.5) pour une ou plusieurs matières premières gazeuses de la série (C) et (D),
- au moins une alimentation (1.6) pour le silicium particulaire (A), avec lequel un catalyseur est éventuellement mélangé, et
- une sortie et une séparation pour le produit (G, H) par la tête du réacteur, un filtre à poussières (1.7) et un condensateur (1.8).

2. Réacteur à lit fluidisé selon la revendication 1, **caractérisé par** un échangeur de chaleur (1.10) pour l'utilisation de la chaleur résiduaire présente pour le préchauffage de courants gazeux (F).

3. Réacteur à lit fluidisé selon la revendication 1 ou 2, **caractérisé par** un échangeur de chaleur (1.5.5) pour l'utilisation de la chaleur résiduaire présente pour le préchauffage de courants gazeux contenant (C) et/ou (D).

4. Réacteur à lit fluidisé selon l'une quelconque des revendications 1 à 3, **caractérisé par** une unité (2) pour le démarrage et le chargement uniforme de l'unité de réacteur à lit fluidisé (1) avec un courant de réactif chauffé (B*), le courant de réactif (B) contenant du chlorosilane, notamment du STC, pouvant être porté d'environ 20 °C, c.-à-d. la température ambiante, à une température de 650 °C à une pression de 25 à 55 bar, et l'unité (2) étant à base d'une alimentation de chlorosilane (B) par une pompe d'alimentation (2.1), d'une cuve d'échangeur de chaleur à gaz (2.2), ainsi que d'un brûleur à gaz (2.3), d'au moins un récipient d'expansion/contenant tampon (2.4) et d'au moins une unité de dosage (2.6), l'unité (2.1) étant reliée par la conduite (2.1.1) à l'unité (2.2), et la conduite (2.2.1) reliant l'échangeur de chaleur (2.2) du côté de la sortie avec l'unité (2.4), le condensat éventuellement formé ici et/ou le chlorosilane gazeux, notamment le STC, pouvant être réintroduits (mode circulaire) par une conduite (2.4.1) et (2.4.2) dans la conduite (2.1.1), et le chlorosilane gazeux chauffé, notamment le STC, (B*) pouvant être dosé dans l'unité de réacteur (1) du côté du fond (1.4) à partir de l'unité (2.4) par la conduite (2.4.3), ainsi que par une unité de régulation (2.6) et une conduite (2.6.1).

5. Réacteur à lit fluidisé selon l'une quelconque des revendications 1 à 4, **caractérisé par** un plateau de fluidisation pour l'alimentation de (B*) (1.4) dans le réacteur (1.1).

6. Réacteur à lit fluidisé selon l'une quelconque des revendications 1 à 5, **caractérisé par** au moins une unité de dosage de gaz pour H₂ (C) (1.5.4) et HCl et/ou chlore gazeux (D) (1.5.2) pour l'approvisionnement des alimentations (1.5).

7. Réacteur à lit fluidisé selon l'une quelconque des revendications 1 à 6, **caractérisé par** une séparation de poussières (1.7), la séparation de poussières étant principalement à base d'une filtration pour le mélange de chlorosilane obtenu dans le réacteur à lit fluidisé et déchargé à la tête du réacteur.

8. Réacteur à lit fluidisé selon l'une quelconque des revendications 1 à 7, **caractérisé par** une unité de séparation (1.8) pour la séparation de courants de matière (G) et (H), le courant de matière (H) se formant en tant que condensat et le courant de matière (G) étant déchargé sous forme gazeuse.

9. Réacteur à lit fluidisé selon l'une quelconque des revendications 1 à 8, **caractérisé par** une enveloppe de réacteur (1.1) d'un diamètre intérieur de 100 mm à 2 000 mm et d'une hauteur de 5 m à 25 m.

10. Procédé de fabrication continue d'un courant de produits contenant du trichlorosilane (TCS) par réaction principalement de silicium (Si) (A), de tétrachlorure de silicium (STC) (B) et d'hydrogène (H₂) (C) et éventuellement de chlorure d'hydrogène gazeux (HCl) et/ou de chlore gazeux (Cl₂) ou d'un mélange de chlorure d'hydrogène gazeux et de chlore gazeux (D), à une pression de 25 à 55 bar et à une température de 450 à 650 °C, et éventuellement en présence d'au moins un catalyseur,
selon lequel
- un réacteur à lit fluidisé selon l'une quelconque des revendications 1 à 9 est chargé à hauteur de 1/8 à 3/4 de son espace de réaction avec du silicium particulaire (A), un catalyseur pouvant éventuellement être mélangé avec le composant (A),
- un courant volumique défini de tétrachlorure de silicium (B*), préchauffé par un échangeur de chaleur chauffé par un brûleur à gaz, est dosé du côté du fond,
- de l'hydrogène gazeux (C) et éventuellement du chlorure d'hydrogène gazeux et/ou du chlore gazeux (D) sont dosés de manière ciblée à un ou plusieurs emplacements dans le courant volumique de tétrachlorure de silicium ou dans la partie inférieure du réacteur, toutefois en dessous de la hauteur de garnissage du remplissage de silicium du réacteur,
- le mélange de produits obtenu lors de la réaction est déchargé à la tête du réacteur et passé par une séparation de poussières à une température supérieure à 400 °C et à une pression de 25 à 55 bar,
- le courant de produits essentiellement débarrassé des fractions de poussières est refroidi, les chlorosilanes sont condensés (H), les fractions gazeuses en excès (G) sont déchargées du courant de produits, et
- la fraction de silicium (A) déchargée du réacteur par le courant de produits est redosée par au moins une alimentation agencée dans la partie supérieure du réacteur au-dessus de la hauteur de garnissage du remplissage de silicium du réacteur.

11. Procédé selon la revendication 10, **caractérisé en ce que** 1 à 5 moles d'H₂ (C) sont utilisées par mole de SiCl₄ (B).

12. Procédé selon la revendication 10 ou 11, **caractérisé en ce que** 0 à 1 mole d'HCl (D) est utilisée par mole d'H₂ (C).

13. Procédé selon la revendication 10 ou 11, **caractérisé en ce que** 0 à 1 mole de Cl₂ (D) est utilisée par mole d'H₂ (C).

14. Procédé selon l'une quelconque des revendications 10 à 13, **caractérisé en ce qu'**un mélange gazeux d'HCl et de Cl₂ en un rapport molaire HCl sur Cl₂ de 0 sur 1 à 1 sur 0 est utilisé en tant que composant (D).

15. Procédé selon l'une quelconque des revendications 10 à 14, **caractérisé en ce que** la température de réaction pour la réaction dans la chambre intérieure du réacteur est surveillée et celle-ci est régulée à un rapport hydrogène/STC constant par le dosage d'HCl et/ou de Cl₂ (D) et/ou
la température de réaction pour la réaction dans le réacteur (1.1) est contrôlée et également régulée par les unités (1.2) et (1.3) en utilisant le milieu (F), ainsi que les unités (1.9) ou (1.11).

16. Procédé selon l'une quelconque des revendications 10 à 15, **caractérisé en ce qu'**un silicium métallurgique d'une taille de particule moyenne de 10 à 3 000 µm est utilisé en tant que silicium (A).

17. Procédé selon l'une quelconque des revendications 10 à 16, **caractérisé en ce qu'**au moins un catalyseur est mélangé avec le silicium (A), le silicium et le système catalytique étant mélangés intensivement.

18. Utilisation d'un dispositif selon l'une quelconque des revendications 1 à 9 pour l'hydrogénation de silanes chlorés supérieurs de formule HₙSiCl₄₋ₙ avec n = 0, 1, 2 ou 3.

19. Utilisation d'un dispositif (également nommé étape à lit fluidisé en abrégé par la suite) selon l'une quelconque des revendications 1 à 9 ou d'une utilisation selon la revendication 18 dans un système composite pour la fabrication de silanes, d'organosiloxanes, de silice précipitée et pyrogénée, et/ou de silicium hautement pur.

20. Utilisation selon la revendication 19, dans laquelle les silanes chlorés supérieurs formés dans le système composite ou les mélanges correspondants de silanes chlorés supérieurs sont recyclés au moins proportionnellement dans les étapes de procédé pour la fabrication de silice pyrogénée et pour la fabrication de chlorosilanes dans le lit fluidisé.

21. Utilisation selon la revendication 19 ou 20, dans laquelle le trichlorosilane obtenu dans l'étape à lit fluidisé est purifié une nouvelle fois, utilisé pour la fabrication de monosilane par dismutation, et le tétrachlorure de silicium formé lors de la dismutation est recyclé au moins proportionnellement dans le procédé par introduction au moins proportionnelle de celui-ci dans le dispositif de chauffage de chlorosilane ou de STC.

22. Utilisation selon l'une quelconque des revendications 19 à 21, dans laquelle, pour la fabrication de silicium polycristallin (grade solaire) par décomposition thermique de monosilane, le monosilane est obtenu par dismutation du trichlorosilane obtenu en utilisant l'étape à lit fluidisé.

23. Utilisation selon l'une quelconque des revendications 19 à 22, dans laquelle l'hydrogène formé lors de la décomposition thermique de monosilane dans le cadre du système composite est recyclé dans l'étape à lit fluidisé.
